Europäisches Patentamt

European Patent Office

Office européen des brevets

(11) Publication number: **0 185 975**
**A1**

## (12) EUROPEAN PATENT APPLICATION

(21) Application number: **85115304.9**

(22) Date of filing: **03.12.85**

(51) Int. Cl.⁴: **C 03 B 37/018**

(30) Priority: **24.12.84 US 685790**

(43) Date of publication of application:
**02.07.86 Bulletin 86/27**

(84) Designated Contracting States:
**DE FR GB NL**

(71) Applicant: **POLAROID CORPORATION**
**549 Technology Square**
**Cambridge, Massachusetts 02139(US)**

(72) Inventor: **Mansfield, Robert J.**
**69 Packard Road**
**Stow, MA 01775(US)**

(72) Inventor: **Snitzer, Elias**
**56 Ivy Road**
**Wellesley, MA 02181(US)**

(72) Inventor: **Tumminelli, Richard P.**
**21 Beverlee Road**
**Tyngsboro, MA 01879(US)**

(74) Representative: **Koch, Günther, Dipl.-Ing. et al,**
**Postfach 920**
**D-8000 München 33(DE)**

(54) Process for fabricating a glass preform.

(57) An inside vapor deposition process for forming on a lathe (22) doped, or if required, undoped glass layers in preforms particularly suitable for drawing single mode optical fibers. A uniform and homogeneous coating of pure $SiO_2$ soot is first deposited at low temperature on the inside surface of a suitable start tube (20) by reaction inside the tube of a vapor phase mixture of, preferably, silicon tetrachloride and oxygen. If to be undoped, this layer is consolidated at high temperature. Otherwise, consolidation takes place in the presence of a gas mixture containing an inert gas dilutant and a glass-modifying dopant, such as fluorine, for the purpose of controlling the index of refraction and/or the viscosity of the final solid layer. Follow-on layers are formed in the same way, except that either the glass-modifying dopant or its concentration is changed to assure a high index inner layer surrounded by a lower index layer. Following formation of the final layer, the tube (20) is conveniently collapsed to form the final preform.

FIG. 2

## BACKGROUND OF THE INVENTION

This invention in general relates to the fabrication of dielectric waveguides and, in particular, to a modified inside vapor deposition process useful in constructing preforms from which optical fibers can be drawn.

Since the middle sixties, a great deal of research and development on glass optical fibers has been done and has resulted in practical fibers which are now routinely used in the communications industry for the transmission of information over both long and short distances. Motivating this rapid progress, which was due largely to developments in materials and fabrication methods, has been the recognition that fibers offer significant advantages over conventional metallic cables by virtue of their very high information carrying capacity and low transmission losses. They are also far more compact and lightweight, factors affording great economic benefits in reduced manufacturing and installation costs.

Structurally, optical fibers are thin filaments of glass having a central region of high index of refraction, or high average index of refraction where the index varies, surrounded by a sheath or cladding region of lower index. Suitably configured, this kind of glass structure causes optical radiation properly injected into one fiber end to propagate along the length of the fiber and emerge from its other end.

The performance of optical fibers for communications is chiefly determined by optical loss or attenuation and by the dispersion experienced by radiation propagating along the fiber length. Losses are caused by absorption, scattering, and variations in fiber index and geometry. Dispersion, which causes a reduction of bandwidth, is of two types. One type of dispersion, due primarily to the material itself, is a variation in refractive index with wavelength, and the other is referred to as modal dispersion because it is due to differences in the optical path lengths encountered by different transmission modes in which light propagates along the fiber.

For optical fibers to be competitive with copper wire based systems in transmitting high data rates over long distances, they must have low transmission losses and produce low signal distortion. In order to obtain such high quality optical fibers, extremely pure glasses are required since even traces of certain impurities such as iron or copper increase attenuation drastically. For wide band transmission with multimode fiber, it is necessary carefully to control refractive index profile. For single mode fibers, the important relationship is the dispersion as a function of wavelength.

To meet these requirements, those skilled in the art have developed various techniques by which optical fibers can be successfully fabricated. These techniques are, by and large, based upon the formation of silica based glass from appropriate glass precursor vapors. Techniques used have been the soot process (U.S. Patent Nos. 3,711,262 and Reissue 28,029); the modified chemical vapor deposition process (U.S. Patent No. 4,217,027); and the vapor axial deposition process (U.S. Patent Nos. 3,966,446; 4,135,901 and 4,224,046). As a result of these processes and improvements over them, optical fibers are now routinely fabricated in commercial processes with losses less than two db/km in certain parts of the optical region of the spectrum.

One example of a significant improvement over processes which relied on the external deposition of soots from vapor phase precursors to form fiber preforms was to reduce the inherent hydroxyl ion (OH) content to levels low enough not to present a problem of undue absorption in wavelength regions of interest. Prior to this improvement, it was known that a successful fiber of low attenuation required the hydroxyl ion content to be below a few parts per million because of the existance of undesirable OH absorption at overtones of the fundamental stretching vibration of OH centered around 2.8 microns. These overtones give rise to absorptions at 1.4 microns and 970 and 750 nm and thus interfere with a transmission band of interest in glass. Thus, the OH ion which was ever present in such processes had to be precluded from the final fiber if low transmission losses were to be attained. The elimination of the OH ion was a particularly vexing problem for the industry because of its presence in undesirable quantities in most of the outside vapor phase processes. To solve this problem, chlorine has been used as a drying agent to remove the OH ion from preforms made from flame hydrolysis as shown and described in U.S. Patent No. 3,933,454. Fluorine has also been proposed as a drying agent as shown and described in U.S Patent No. 4,065,280 and as a dopant in a fiber for purposes of reducing hydroxyl ion content as shown and described, for example, in U.S. Patent No. 4,441,788. In addition, fluorine has been used to reduce cladding index (U.S. Patent No. 4,082,420).

The OH concentration problem was also substantially overcome with the advent of the modified chemical vapor deposition process (MCVD) because glass is formed by a gas phase oxidation in the absence of hydrogen bearing compounds.

To improve transmission bandwidth, those skilled in the art chose to use single mode fibers rather than multimode fibers because the use of single mode fibers eliminated dispersion manifested as pulse spreading due to differences in optical path length between the various modes propagating in a multimode fiber.

Initial fabrication of single mode fibers was of the step index type in which the core was of uniform index of refraction and the cladding was primarily of a uniform lower index of refraction. Some fibers comprised silica cores with doped claddings of, for example, borosilicate and later fluorosilicate to decrease the index of refraction. Other fibers included cores of, for example, germania silicate and silica claddings. However, these designs require the high temperatures necessary to process deposited pure silica, which is present in either the core or the cladding.

The latter fibers included germania silicate cores and silica claddings. Phosphorus in the core simplifies the manufacturing process because it lowers the melting temperature of silica. Furthermore, the substitution of fluorine for boron in the fiber likewise lowers the index of refraction of the fiber and lowers the melting temperature and avoids the relatively low wavelength infrared absorption edge associated with borosilicate glasses.

In spite of the many innovations made in this art, improved manufacturing processes can usefully be employed to assure low loss and low dispersion which, in turn, translate into long distances between repeaters and to high telecommunications capacity. Furthermore, ease and efficiency of manufacture and the use of low cost materials are important considerations. Accordingly, it is a primary object of the present invention to provide an efficient low temperature process for use in the fabrication of preforms from which optical fibers can be drawn.

Other objects of the invention will, in part, be obvious and will, in part, appear hereinafter. The invention accordingly comprises the steps exemplified in the detailed disclosure which follows.

SUMMARY OF THE INVENTION

This invention in general relates to the fabrication of dielectric waveguides and, in particular, to an inside vapor deposition process for the efficient formation of glass doped layers in preforms particularly suitable for drawing into single mode optical fibers. The process is performed on a lathe by first depositing at low temperature on the inside surface of a suitable start tube a homogeneous and uniform coating consisting of one or more layers of pure $SiO_2$ soot by reaction of a vapor phase mixture of silicon tetrachloride, or other suitable compound containing glass-forming constituents, with oxygen in a traveling heating zone while the tube is rotated with the mixture flowing through it. If required, the soot can be dehydrated with chlorine and consolidated without doping. Otherwise, the soot is consolidated in the presence of a gas mixture containing an inert gas and a glass-modifying dopant, such as fluorine, whose concentration is selected for purposes of control of index of refraction and viscosity.

Subsequent coatings are formed in similar fashion except that either the dopant or its concentration are changed to assure that the inner or last coating, which is to serve as the fiber core, is of high index and is surrounded by a region having an index appropriate to act as a cladding.

After formation of the final coating, the tube can be collapsed conveniently on the lathe, or removed and the inner structure collapsed.

-5-

BRIEF DESCRIPTION OF THE DRAWINGS

The novel features that are considered characteristic of the invention are set forth with particularity in the appended claims. The invention itself, however, particularly its sequence of steps and associated apparatus, together with other objects and advantages thereof, will be best understood from the following description when read in connection with the accompanying drawings wherein like numbers have been employed in the different figures to denote the same parts and wherein:

Fig. 1 is a diagrammatic cross-section of a fiber structure which can be produced from preforms fabricated from the inventive process;

Fig. 2 is a diagrammatic elevation of apparatus suitable for practicing the invention; and

Fig. 3 is a flow chart illustrating various steps in the process.

DETAILED DESCRIPTION

This invention comprises a process for the efficient formation of glass layers in preforms drawable into optical fibers, particularly those of the single mode, stepped index type, although the fabrication of graded index type fiber is also possible.

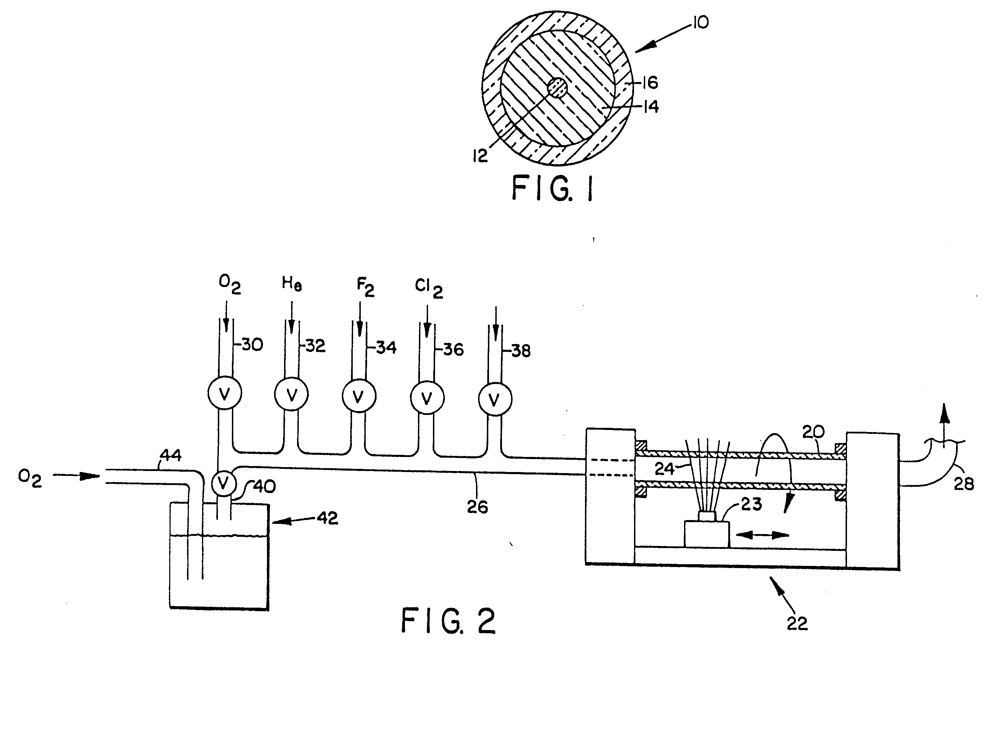

As with all fabrication processes, analysis of the structure, material, and performance of the ultimate product to be made is required for an understanding of requirements and conditions of the process, and for this purpose, reference is now made to Fig. 1 which illustrates diagrammatically the cross-section of a single-mode optical fiber structure 10 which is representative of the type to be typically drawn from preforms fabricated with the process of the invention. As seen, fiber 10 comprises a core 12 of uniform index of refraction surrounded by a uniformly thick cladding layer 14 whose index of refraction is also uniform and lower than that of the core 12. Surrounding the cladding 14 is an outer layer 16 which is present as a collapsed start tube as will become apparent.

The radius of the core 12, the indices of refraction of core 12 and cladding 14, and the wavelength at which the fiber 10 is intended to operate can take on a range of values, but the values within the range are related in a well-known way by the following equation governing single mode propagation, i.e.,

$$2\pi(a/\lambda)(n_1{}^2 - n_2{}^2)^{1/2} < 2.405,$$

where a = core radius, $\lambda$ is wavelength, $n_1$ and $n_2$ are core and cladding indices of refraction, and 2.405 is a constant whose value is the first root of the $0^{th}$ order Bessel function. Thus, these fiber parameters can be conveniently chosen from a sensible range of values but, as the equation shows, cannot be selected independently of one another. Typically, the core radius will be 10 micrometers or less, the numerical aperture, (N.A. = $\sqrt{(n_1{}^2 - n_2{}^2)}$, will be within the range between 0.1 and 0.2, and $\lambda$ preferably is within the visible and near infrared regions of the spectrum where low absorption windows and suitable light sources exist. Other fiber geometries are possible while still having single mode propagation, but where the core becomes noncircular, the above equation becomes an approximation to actual behavior and hence must be treated appropriately.

The nominal cladding diameter is preferably in accordance with accepted industry practices and, therefore, would be within the range from 50 to 150 micrometers.

Fiber 10 is drawn in a conventional manner, but from a preform fabricated in a manner to be described to be substantially free of hydroxyl ions and to have both core and cladding of low viscosity so that drawing is

-7-

easier, particularly core diameter maintenance, and can take place at lower temperatures than those required for pure $SiO_2$.

The composition of the core 12 can be either pure fused silica or pure fused silica lightly doped with a glass-modifying agent, such as fluorine, to reduce its hydroxyl ion content and lower its viscosity. For these purposes, the amount of fluorine present in the core 12 is preferably within the range of 0.2 to 0.4 mole percent.

For one useable range of index of the cladding 14, its material composition is also of pure fused silica containing a base level of fluorine, within the range of 0.2 to 0.4 mole percent, and an additional level between the range of 0.8 and 1.61 mole percent. The base level is there for the same reasons that the same amount of fluorine is added to the core 12, and the additional level is present to reduce the index of refraction to be within the required range for the guiding action.

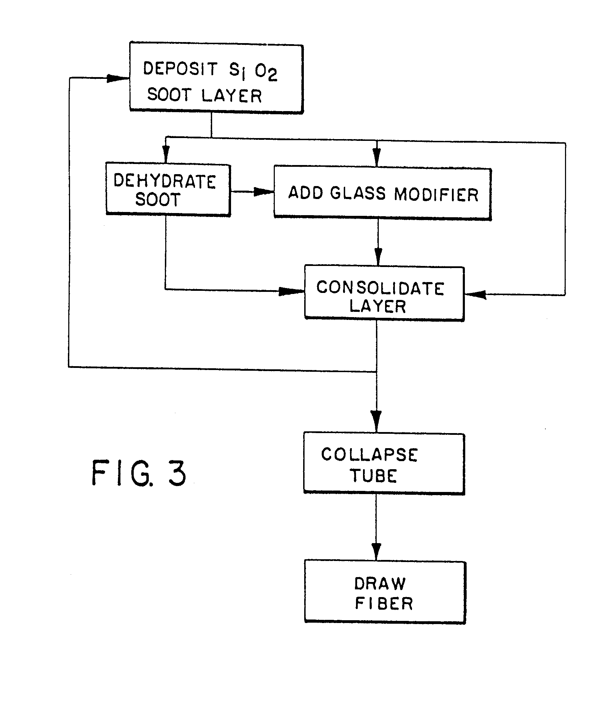

The process to be used to fabricate a preform from which the fiber 10 can be drawn may best be understood by referring now to Figs. 2 and 3.

As shown in Fig. 2, a start tube 20 of suitable composition, preferably silica, is mounted between the synchronous chucks of a glass lathe 22 for rotation in a well-known and controllable manner.

Beneath the tube 20, on the base of the lathe 22, there is movably mounted a heat source 23 that produces a controllable flame 24 that can be made to traverse the length of the tube 20, back and forth, under precise control. In this manner, a movable hot zone is provided for locally heating the outside surface of the tube 20 while at the same time providing a hot zone inside the tube 20 whose temperature can be set in accordance with the relative motion of the flame 24 with respect to the tube surface, the tube geometry and composition, and characteristics of the heat source 23 along with its fuel and feed rates.

The left side of tube 20 serves as an inlet while its right side is connected to an exhaust outlet 28.

The inlet side connects to a feeder tube 26 which, in turn, is connected to valved feeder lines 30-40. Feeder 40 connects with a reservoir 42 which contains a normally liquid compound including at least one glass-forming precursor, preferably silicon tetrachloride ($SiCl_4$) although others are possible. Oxygen is bubbled through the reservoir liquid contents via feeder tube 44 to make available via feeder 40 a vapor phase mixture of oxygen with the compound containing the glass-precursor. Gasses are introduced into the tube 26 via the remaining feeder tubes, 30-38, by simply activating their associated flow control valves.

With all gas flow control valves off, a first vapor phase mixture including oxygen and silicon tetrachloride is introduced into tube 26 to flow at a controlled rate through the interior of tube 20.

The exterior of tube 20 is then heated by the source 23 as the source 23 traverses the tube 20 and the tube 20 rotates. Heat is applied in this manner until the vapor mixture inside the tube experiences a moving heated zone whose temperature is high enough to react the vapor to deposit a coating of one or more layers of pure, porous glass $SiO_2$ soot of homogeneous composition and uniform thickness on the interior surface of tube 20. The reaction temperature, measured by pyrometer at the outside surface of the tube 20 is within the range between 1,325°C and 1,700°C, but preferably within the range between 1,325°C and 1,400°C, below the temperature at which start tube 20 distorts.

The thickness of this soot coating depends on its compaction ratio upon consolidation, its ultimate dimension in the fiber, and the preform drawdown ratio, and can be established in a well-known manner knowing these factors.

If hydroxyl ions (OH) are suspected present in the $SiO_2$, chlorine ($Cl_2$) can be flowed through the interior of the tube 20 to remove them and thus dehydrate the $SiO_2$ soot.

Next, a glass-modifying dopant in gaseous form, preferably a fluorine containing gas along with a dilutant in the form of an inert gas, preferably helium (He), is introduced at the tube to fill the pores of the $SiO_2$ soot with this second mixture.

The $SiO_2$ coating is then consolidated to form a solid glass layer having an index of refraction different than that of pure $SiO_2$ by raising the temperature of tube 20 to within the range between 1,450 and 1,550°C. This may be different, either higher or lower, depending on the glass-modifier, but, in any case, care is to be exercised to assure that the tube 20 does not distort. This can be accomplished using the rate at which the tube 20 moves relative to the hot zone.

In case this consolidated layer is to be the fluorinated low index cladding layer as in our fiber example discussed above, a second consolidated layer of high index is required for the core, and this may be laid down by repeating the process as required for this purpose. For the example fiber, less fluorine would be used during the doping and consolidation steps.

Afterwards, the tube 20 with its two different index layers can be conveniently collapsed by further heat treatment proceeding from one end to the opposite.

Once the collapsed preform is in hand, fiber is drawn in the usual way.

If only one doped coating is required where, for example, it is to act as the core with the start tube itself to be of sufficient quality to act as cladding, the tube can be collpased directly after this doped coating is consolidated and fiber drawn immediately or while collapsing the tube if done off the lathe.

In any event, the temperature at which the tube collapses is approximately 2,000°C.

Start tube diameters can be of any convenient diameter and wall thickness and silica tubes with a 16mm I.D. x 20mm O.D. have been found satisfactory. Soot deposition rates of 0.5 grams per min at 1,350°C have been achieved, which for the operating conditions is the same as for pure fused silica. Generally, the deposition rate is largely unaffected by the addition of dopants.

The major advantages with this process are its lower operating temperature, thus removing the possibility of start tube collapse and distortion during soot deposition and doping steps and, as well, significant reduction in OH diffusion from the start tube; higher efficiencies for soot deposition; lower volume flow rates and heating rates because of geometry and material masses involved; no fluorine etching of the start tube or what would correspond to a consolidation furnace tube; and convenience and ease of manufacture since all steps can be done on the lathe with no consolidation furnace required, such as the OVD process wherein the furnace requires frequent replacement of the furnace tube due to etching.

It will be obvious to those skilled in the art that changes may be made to the above-described method without departing from the scope of the invention. Consequently, it is intended that all matter contained in the above description or shown in the accompanying drawings shall be interpreted as illustrative and not in a limiting sense.

-11-

What is claimed is:

1. A process for forming, for production of optical waveguides, a glass preform having a glass layer containing an index of refraction altering dopant, characterized by:

forming at least one porous glass soot coating on the interior surface of a glass start tube by introducing in said tube a first gas containing a glass forming material, and heating at least the interior of said tube to deposit a coating of porous glass soot on the interior surface thereof; and

heating at least said soot coating to consolidate said soot coating to a solid glass layer.

2. The process of claim 1, characterized by:

introducing in said tube to fill the pores of said glass soot a second gas containing a dopant capable of altering the index of refraction of said soot coating; and

heating at least said soot coating to consolidate said soot coating to a solid glass layer having its index of refraction altered in accordance with said dopant.

3. The process of claim 2, characterized by the fact that said forming step provides an undoped glass soot coating on the interior of said start tube.

4. The process of claim 2, characterized by the fact that said forming step includes forming porous soot on substantially the complete interior surface of said start tube to protect said start tube from any glass attacking reagents resulting from said dopant containing gas.

5. The process of claim 1, characterized by:

supporting the start tube about its longitudinal axis;

flowing through the interior of said tube a first vapor mixture including oxygen and at least one compound containing a glass-forming precursor;

heating said tube so that said first vapor mixture inside of said tube experiences a moving heated zone whose temperature is high enough to react said first vapor mixture to deposit a coating of porous glass soot of homogeneous composition and uniform thickness on the interior surface of said tube;

introducing inside of said tube a second vapor mixture including at least one glass-modifying dopant to fill the pores of said soot with said second mixture; and

consolidating said soot to form a solid glass layer having an index of refraction different from what it would otherwise be absent said glass-modifying dopant by heating said tube while maintaining said second gas mixture at a positive differential pressure compared with that in the interior of said soot pores.

6. The process of claim 5, characterized by the fact that said heating step comprises moving a source lengthwise along the exterior of said tube while rotating said tube.

7. The process of claim 5, characterized by the fact that the step of dehydrating said soot coating to reduce its water content after said heating step.

8. The process of claim 5, characterized by the fact that said glass-forming precursor is silicon tetrachloride ($SiCl_4$).

9. The process of claim 5, characterized by the fact that said glass-modifying dopant is fluorine.

10. The process of claim 5, characterized by the step of forming a layer of pure silicon dioxide ($SiO_2$) in the inside of said tube prior to depositing said soot coating.

-13-

11. The process of claim 5, characterized by the step of collapsing said tube.

FIG. 1

FIG. 2

1/2

0185975

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 045 198 (RAU) <br><br> * Whole document * <br> --- | 1,2,3, 5,6,8- 11 | C 03 B 37/018 |
| A | FR-A-2 428 618 (SOCIETE ANONYME DE TELECOMMUNICATIONS) <br> * Whole document * <br><br> ----- | 1,2,5, 9 | |

**TECHNICAL FIELDS SEARCHED (Int. Cl.4)**

C 03 B 37/00

The present search report has been drawn up for all claims

| Place of search | Date of completion of the search | Examiner |
|---|---|---|
| THE HAGUE | 05-03-1986 | VAN DEN BOSSCHE W.L. |